# EUROPEAN PATENT SPECIFICATION

(11) **EP 3 709 146 B1**
(45) Date of publication and mention of the grant of the patent: **08.04.2026**
(21) Application number: 18876743.8
(22) Date of filing: 09.11.2018
(51) Int. Cl.: G06F 3/0488, G06F 3/03, G01C 21/20, G06F 3/0481, G06F 3/0484

(54) **NAUTICAL CHART DISPLAY DEVICE, NAUTICAL CHART DISPLAY METHOD, AND NAUTICAL CHART DISPLAY PROGRAM**
VORRICHTUNG ZUR ANZEIGE EINER SEEKARTE, VERFAHREN ZUR ANZEIGE EINER SEEKARTE UND PROGRAMM ZUR ANZEIGE EINER SEEKARTE
DISPOSITIF D'AFFICHAGE DE CARTE NAUTIQUE, PROCÉDÉ D'AFFICHAGE DE CARTE NAUTIQUE ET PROGRAMME D'AFFICHAGE DE CARTE NAUTIQUE

(30) Priority: 10.11.2017 JP 2017216943
(43) Date of publication of application: 16.09.2020
(73) Proprietor: Furuno Electric Company Limited, Hyogo 662-8580 (JP)
(72) Inventor: OKUDA, Masato, Nishinomiya-City Hyogo 662-8580 (JP); MORITA, Takatoshi, Nishinomiya-City Hyogo 662-8580 (JP); HAMAMOTO, Kentaroh, Nishinomiya-City Hyogo 662-8580 (JP); OHMORI, Takashi, Nishinomiya-City Hyogo 662-8580 (JP)
(74) Representative: Cleveland Scott York
(86) International application number: PCT/JP2018/041582
(87) International publication number: WO 2019/093456

(56) References cited:
- WO-A1-2013/042394
- WO-A1-2013/046759
- WO-A1-2013/051051
- JP-A- 2012 099 093
- JP-A- 2014 052 264
- JP-A- H0 378 601
- JP-A- H0 454 629
- US-A1- 2011 169 748
- US-A1- 2014 250 401
- US-A1- 2015 242 000

## Description

The present disclosure mainly relates to a nautical chart display device which displays a nautical chart.

WO 2013/051051 A1 (Patent Document 1) discloses a display device which displays navigational information including a nautical chart. This display device is configured as a touch panel, and executes various processings based on touch operations to a screen. For example, by touching two points on the screen with fingers during display of the nautical chart, a distance on the nautical chart between the two touched points is displayed on the screen.

US 2016/0054893 A1 (Patent Document 2) discloses a technology related to a graphic design application executed, for example, by a tablet device having a touch panel. In this application, a digital ruler can be displayed on a screen by a given operation being performed. By giving instructions to this digital ruler using the touch panel, it is possible to draw lines of various patterns.

US 2015/0242000 A1 (Patent Document 3) discloses a ruler which is used by being placed on a screen of a tablet device having a touch panel. This ruler is provided with a pair of main contact point elements. When a user touches the ruler, capacitance of the touch panel changes via the pair of main contact point elements. The tablet device is configured to recognize the ruler based on a distance between the main contact point elements. Moreover, by pressing a button provided to the ruler, figures such as parallel lines can be drawn around the ruler.
US 2014/0250401 discloses a touch panel device comprising a display unit, a detector, and a controller. The display unit displays a nautical chart on a touch screen. The detector is arranged to detect touches at two points on the screen. The touches are made by the user's fingers. The controller is arranged to display point-to-point information about the two touched location, such as a distance and heading. A scale is displayed between the two touched points.

However, the method of measuring the distance by the touch operation as described in Patent Document 1 may be difficult for a user who is not used to this kind of device (a user who is used to a paper nautical chart). Moreover, Patent Documents 2 and 3 do not describe the technology related to the measurement of the distance.

The present disclosure is made in view of the situation described above, and a primary purpose thereof is to provide a nautical chart display device which enables a measurement of a distance in a method easily understandable even for a user who is not used to a measurement of a distance by a touch operation.

The problem to be solved by the present disclosure is as described above, and measures to solve the problem and effects thereof are described as follows. According to one aspect of the present invention there is provided a nautical chart display device as defined in claim 1.
According to another aspect of the present invention there is provided a method for displaying a nautical chart as defined in claim 10.
According to a further aspect of the present invention there is provided a non-transitory computer-readable recording medium storing a control program as defined in claim 11.
Preferred features of the invention are recited in the dependent claims.

According to one aspect of the present disclosure, a nautical chart display device having the following configuration is provided. That is, the nautical chart display device includes a display unit, a touch operation identifying module, a tool identifying module, and a tool displaying module. The display unit displays a nautical chart on a screen. The touch operation identifying module identifies a touch operation to the screen. The tool identifying module identifies a position and an orientation of a measurement tool placed on the screen. The tool displaying module displays distance markers according to a scale of the nautical chart on the screen at the position where the measurement tool is placed, based on the position and the orientation identified by the tool identifying module.

Accordingly, since a distance on the nautical chart is displayed only by the measurement tool being placed on the screen, it is possible to measure the distance in a method easily understandable even for a user who is not used to the measurement of the distance by the touch operation. Particularly, although when a paper nautical chart is used, a calculation of correspondence between a scale of the nautical chart and markers of a ruler is required, in this disclosure, time and effort for this calculation can be saved since the distance markers corresponding to the scale of the nautical chart is displayed.

### BRIEF DESCRIPTION OF DRAWINGS

Fig. 1 is a block diagram of an electronic nautical chart displaying network system including a nautical chart display device according to one embodiment of the present disclosure.
Fig. 2 is a view illustrating a screen displayed on a display unit.
Fig. 3 is a flowchart illustrating processing executed by a processor when a ruler is placed on the screen of the display unit.
Fig. 4 is a view illustrating a situation in which the ruler is placed on the screen of the display unit so that distance markers are displayed.
Fig. 5 is a view illustrating a situation in which displayed positions and numerical values of the distance markers are changed when a position of the ruler and a scale of a nautical chart are changed.
Fig. 6 is a view illustrating a situation in which a line is drawn along the ruler by using a stylus so that a distance is displayed on the screen.
Fig. 7 is a view illustrating a situation in which an operation is performed by using a divider so that the distance and a direction are displayed on the screen.

### MODES FOR CARRYING OUT THE DISCLOSURE

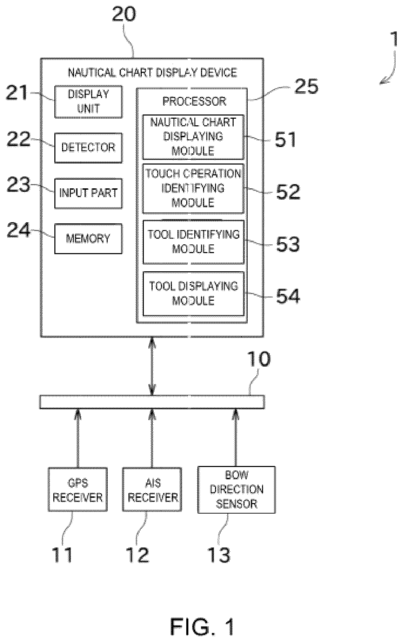

Next, one embodiment of the present disclosure will be described with reference to the drawings. First, an electronic nautical chart displaying network system 1 is described with reference to the Fig. 1. Fig. 1 is a block diagram of the electronic nautical chart displaying network system 1 including a nautical chart display device 20 of this embodiment.

The electronic nautical chart displaying network system 1 may be mounted on a ship and configured to display various information required for navigation. As illustrated in Fig. 1, the electronic nautical chart displaying network system 1 may include a GPS receiver 11, an AIS receiver 12, a bow direction sensor 13, and the nautical chart display device 20. Moreover, each of the marine equipment configuring the electronic nautical chart displaying network system 1 may be connected to each other via a marine network 10.

The marine network 10 may be a network for communication between the marine equipment on the same ship. The respective marine equipment can exchange detected information etc. via the marine network 10. The marine network 10 may be a LAN (Local Area Network), and in detail, Ethernet^{®}, a CAN (Controller Area Network), or NMEA (National Marine Electronics Association) may be used. Note that at least one of the GPS receiver 11, the AIS receiver 12, and the bow direction sensor 13 may be connected directly with the nautical chart display device 20 using a cable etc., without being connected via the marine network 10.

The GPS receiver 11 may receive positioning signals from GPS satellites via GPS antennas (not illustrated). The GPS receiver 11 may acquire a position of the ship (in detail, positions of the GPS antennas, and an absolute position of the ship based on the terrestrial reference) based on the positioning signals, and transmit it to the nautical chart display device 20. Note that, instead of the GPS receiver 11, a receiver for acquiring the position of the ship by using a GNSS other than the GPS (e.g., GLONASS or GALILEO) may be used.

The AIS receiver 12 may receive an AIS signal transmitted from another ship. The AIS (Universal Shipborne Automatic Identification System) is a system which transmits the positional information, the navigational information, etc. of the ship to the surroundings thereof wirelessly. The AIS receiver 12 may receive the AIS signal transmitted from another ship and analyze it to acquire information on an absolute position, a destination, etc. of another ship (AIS information). The AIS receiver 12 may transmit the acquired AIS information to the nautical chart display device 20. The AIS information may include a name, the absolute position, a course, and the destination of another ship. Note that the analysis of the AIS signal may be performed by the nautical chart display device 20.

The bow direction sensor 13 may detect a bow direction of the ship (a direction in which a bow of the ship is directed) as an absolute azimuth based on the terrestrial reference. A magnetic direction sensor, a GPS compass, a gyrocompass, etc. may be used as the bow direction sensor 13. The bow direction sensor 13 may transmit the detected bow direction to the nautical chart display device 20.

The nautical chart display device 20 may be a device for displaying an electronic nautical chart. The nautical chart display device 20 of this embodiment may be a comparatively large in size (e.g., a screen size of 30 inches or larger, or 40 inches or larger), and may be disposed so that a displaying screen becomes parallel with a substantially horizontal direction. Note that the nautical chart display device 20 may have the screen size smaller than 30 inches, or the displaying screen thereof may be disposed at or near vertical.

The term "substantially horizontal direction" as used herein may refer to a direction including a plane parallel to a floor surface on which the nautical chart display device 20 is disposed, in addition to a plane perpendicular to the vertical direction. Moreover, the "substantially horizontal direction" as used herein may not strictly be a direction perpendicular to the vertical direction, or parallel to the floor surface, but include a case of having an angle of 10° or less. Also, a case in which an inclination angle of the screen of the nautical chart display device 20 is changeable may correspond to "the nautical chart display device 20 is disposed so that the screen becomes parallel with the substantially horizontal direction," as long as the inclination angle can be changed to direct toward the substantially horizontal direction.

As illustrated in Fig. 1, the nautical chart display device 20 may include a display unit 21, a detector 22, an input part 23, a memory 24, and a processor 25.

The display unit 21 may be a unit having the screen on which electronic data can be displayed by using diagram(s) and character(s). The display unit 21 is, for example, a liquid crystal display, but may be a plasma display, an organic electro-luminescence display, etc. Although in this embodiment the screen of the display unit 21 has a rectangular shape, it may have a different shape, such as a square shape.

The detector 22 may be a touch panel of, for example, a capacitance type disposed on the screen of the display unit 21. The detector 22 can detect a touch and a position of the touch to a screen by a finger of a user or by another operation tool (e.g., a stylus 62 described later). Moreover, the detector 22 can detect a position where a tool which is used, for example, by being placed on the screen of the display unit 21 is placed. The detector 22 may output an electrical signal according to the detected position. Note that a hardware key may be disposed in addition to the touch panel.

The touch operation may include "a drag operation," "a pinching operation," and "a rotating operation," other than the operation of touching one point or a plurality of points. The drag operation may be an operation of moving finger(s) touching the screen in a given direction without the finger(s) being separated from the screen. This drag operation may correspond to processing to scroll the nautical chart. The pinching operation may be an operation of moving two fingers touching the screen, closer to each other (pinch-in operation) or away from each other (pinch-out operation), without the fingers being separated from the screen. This pinching operation may correspond to processing to change a scale of the nautical chart. The rotating operation may be an operation of touching the screen with two fingers and rotating one finger around the other finger. This rotating operation may correspond to processing to rotate the nautical chart (to change a direction of the nautical chart with respect to the direction of the screen).

The input part 23 may accept an input of the electrical signal outputted from the detector 22. The input part 23 may receive an input of a signal outputted from an external device of the nautical chart display device 20, in addition to the electrical signal outputted from the detector 22. In detail, the input part 23 may be an input port etc. to which the signal outputted from the detector 22 or the signal outputted from the external device is inputted. The processor 25 may execute processing according to the signal inputted into the input part 23.

The memory 24 may store nautical chart information, point(s) registered by the user, a route created by the user, various programs (e.g., a nautical chart display program), etc. The memory 24 may be a nonvolatile memory, such as a hard disk drive, a flash memory (a flash disk, a memory card, etc.), or an optical disc. The memory 24 may be comprised of one of the hardware described above, or may be comprised of a plurality of the hardware. For example, only the nautical chart information may be stored in the optical disc, and other information may be stored in the hard disk drive.

The processor 25 may be a processing unit such as an FPGA, an ASIC, or a CPU. The processor 25 may read the program stored in the memory 24 etc. to a RAM etc., and execute the program to execute various processings related to the nautical chart display device 20. Accordingly, the processor 25 may implement a nautical chart displaying module 51, a touch operation identifying module 52, a tool identifying module 53, and a tool displaying module 54.

The nautical chart displaying module 51 may display the nautical chart on the display unit 21. The touch operation identifying module 52 may identify which the touch operations described above is operated, based on the touched position and a change in the touched position detected by the detector 22. The tool identifying module 53 may identify a type, a position, an orientation, etc. of the tool which is used, for example, by being placed on the screen of the display unit 21. The tool displaying module 54 may display information related to the tool based on, for example, the position, the orientation, and the operation of the tool. Note that details about processing executed by the tool identifying module 53 and the tool displaying module 54 are described later.

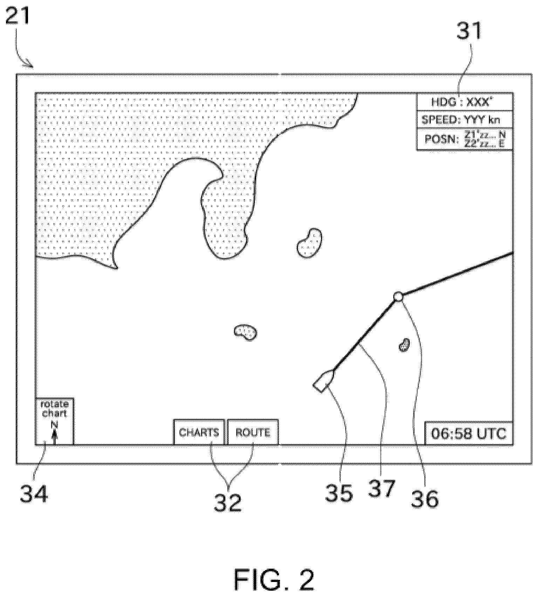

Fig. 2 illustrates a screen displayed on the display unit 21 by the processor 25 executing processing. In Fig. 2, land areas are indicated by dots, and a sea area is indicated by plain color. Moreover, on the screen, basic ship information 31 indicating the position, the bow direction, etc. of the ship by texts, menu buttons 32 for managing the nautical chart, creating the route, etc., and a nautical chart direction adjustment button 34 for adjusting the direction of the nautical chart, are displayed so as to be superimposed on the nautical chart. When the nautical chart direction adjustment button 34 is touched, a mode may be switched between a north-up mode in which the nautical chart is displayed with an upper side of the screen being north, a heading-up mode in which the nautical chart is displayed with the upper side of the screen being the bow direction of the ship, and a course-up mode in which the nautical chart is displayed with the upper side of the screen being a course direction.

Moreover, as illustrated in Fig. 2, on the screen of the display unit 21, a ship symbol 35 indicating the position and the bow direction of the ship on the nautical chart, a waypoint 36 which is a point registered by the user in advance and is also a via-point of a route, and a route 37 are displayed. A position and a direction of the ship symbol 35 being displayed on the screen may be defined so as to correspond to the position acquired by the GPS receiver 11 and the bow direction acquired by the bow direction sensor 13. Moreover, an AIS symbol indicating another ship may be displayed based on the AIS information acquired by the AIS receiver 12.

When the user selects a given menu item and touches the screen where the nautical chart is displayed, the detector 22 may detect the touched position, and the processor 25 may identify the position on the nautical chart associating with the touched position on the screen, and thus the touched point can be registered. Moreover, the route may be created by the user specifying a departure point, a via-point, and a destination point through the touch operation (alternatively by selecting points among those registered in advance). Note that the nautical chart display device 20 is also capable of creating the route by only the departure point and the destination point being set by the user.

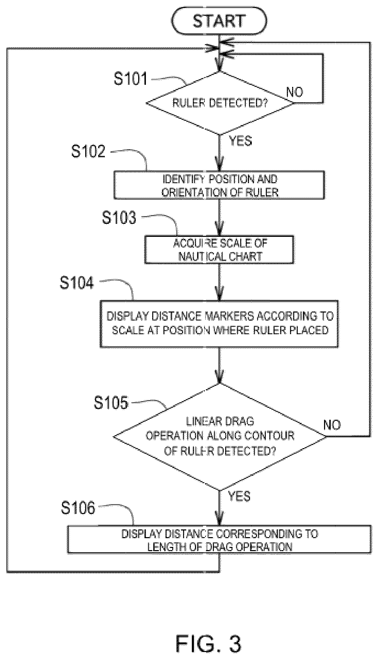

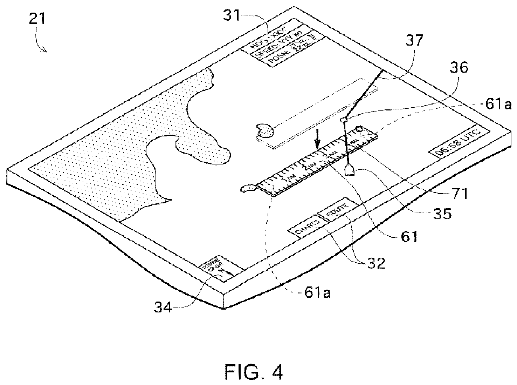

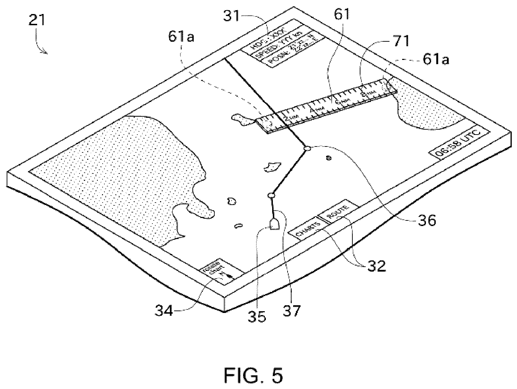

Next, with reference to the Figs. 3 to 5, a method for using a ruler 61 (a measurement tool) which is a type of the tool, and processing executed by the processor 25 according to, for example, the position of the tool are described. Fig. 3 is a flowchart illustrating processing executed by the processor 25 when the ruler 61 used in conjunction with the nautical chart display device 20 is placed on the screen of the display unit 21. Fig. 4 is a view illustrating a situation in which the ruler 61 is placed on the screen of the display unit 21 so that distance markers 71 are displayed. Fig. 5 is a view illustrating a situation in which a position of the ruler 61 and the scale of the nautical chart are changed so that positions and numerical values of the distance markers 71 are changed.

First, a configuration of the ruler 61 is described. The ruler 61 may be a rectangular plate member, and have long sides and short sides. The ruler 61 may be structured so that its substantially entire part has translucency. The "translucency" may mean a property of an object of permitting visible light to pass therethrough, and include both of being transparent and being semi-transparent. According to this configuration, even when the ruler 61 is placed on the screen of the display unit 21, the content displayed on the screen (in detail, the nautical chart) may be visible through the ruler 61. Moreover, the distance markers may not be printed on the ruler 61, and as illustrated in Fig. 4, the distance markers 71 are displayed on the screen of the display unit 21 at the position where the ruler 61 is placed. Therefore, the user can use the ruler 61 as if the distance markers 71 are printed on the ruler 61.

Moreover, the ruler 61 is not limited to have the rectangular shape, but may have a different shape. For example, the ruler 61 may have a square plate shape, or may have a shape of which a thickness is uneven. Moreover, a part of the ruler 61 may not have the translucency, as long as the part in which the distance markers 71 are displayed has the translucency.

Inside the ruler 61, two detecting objects 61a may be disposed. The detecting objects 61a may have conductivity and be disposed so as to contact with a back surface of the ruler 61. According to this configuration, the detecting objects 61a may change a capacitance of the detector 22. Note that the detecting objects 61a may change the capacitance of the detector 22 by contacting with the screen via a thin plate etc. (i.e., without directly contacting with the screen). Moreover, the detecting objects 61a may electrically be connected to a front surface of the ruler 61 so that the capacitance of the detector 22 is changed through user's finger etc.

When the ruler 61 is placed on the screen of the display unit 21, the detector 22 may detect the two detecting object 61a. A distance between the two detecting objects 61a (hereinafter, referred to as "inter-detecting-object distance") may always be constant, and the inter-detecting-object distance (i.e., a layout of the detecting objects 61a) may be stored in the memory 24 in advance. The tool identifying module 53 may determine whether the ruler 61 is placed on the screen of the display unit 21, based on whether touches to two points with a span therebetween matching the inter-detecting-object distance exist. When the two touches with the span therebetween matching the inter-detecting-object distance exist, the position and the orientation of the ruler 61 can be identified.

When the user touches two points using his/her fingers with the span therebetween matching the inter-detecting-object distance, the tool identifying module 53 may misdetect that the ruler 61 is placed on the screen of the display unit 21 even though it is not placed. In order to prevent the misdetection, the tool identifying module 53 may determine that the ruler 61 exists when the two touches with the span therebetween matching the inter-detecting-object distance exist for more than a given period of time. This is because it is hard to suppose that the touches to two points by user's fingers maintain the same distance. Alternatively, in order to further securely prevent the misdetection, the ruler 61 may include three or more detecting objects 61a. In this case, a layout of the three or more detecting objects 61a may be stored in the memory 24. The tool identifying module 53 may determine that the ruler 61 is placed on the screen of the display unit 21 when the layout stored in the memory 24 and the detected touched positions are the same.

Moreover, the detecting objects 61a in this embodiment may self-generate static electricity. Further, if the nautical chart display device 20 operates as a touch panel of an electromagnetic induction type alternative or in addition to the capacitance type, the detecting objects 61a may generate a magnetic field.

Next, processing executed by the processor 25 (the tool identifying module 53 and the tool displaying module 54) is described with reference to the flowchart in Fig. 3. The tool identifying module 53 may determine whether the ruler 61 exists based on whether the span between the two touches matches the inter-detecting-object distance as described above (Step S101). When the tool identifying module 53 determines that the ruler 61 exists (when the ruler 61 is detected), it may identify the position and the orientation of the ruler 61 based on the position and the layout of the detecting objects 61a (Step S102).

Next, the tool displaying module 54 may acquire the current scale of the nautical chart (Step S103). As illustrated in Fig. 4, the tool displaying module 54 may display the distance markers 71 according to the scale of the nautical chart at the position where the ruler 61 is placed (Step S104). In detail, the tool displaying module 54 may also grasp a positional relationship between the position of the detecting objects 61a and the position of a contour of the ruler 61, and display the distance markers 71 at a part where the contour of the ruler 61 (further in detail, both of two long sides of the contour) is located.

Therefore, it is possible to measure the distance by using the distance markers 71 displayed on the screen of the display unit 21. The tool identifying module 53 and the tool displaying module 54 may identify the position and the orientation of the ruler 61 as needed, and when the position or the orientation of the ruler 61 is changed, the position or the orientation of the distance markers 71 may be changed accordingly. Thus, the user can measure the distance of the object that the user wants to measure on the nautical chart, by sliding the ruler 61 to the desired position in the state where the ruler 61 is placed on the screen of the display unit 21.

Moreover, the processor 25 may also acquire the scale of the nautical chart as needed, and when the scale of the nautical chart is changed, the processor 25 may change the values of the distance markers 71. Note that the processor 25 may change not only the values of the distance markers 71 but also intervals between the distance markers 71. Fig. 5 illustrates a situation in which the position of the ruler 61 and the scale of the nautical chart are changed with respect to Fig. 4. Accordingly, the distance on the nautical chart can easily be measured by using one ruler 61 regardless of the scale of the nautical chart. Particularly, in this embodiment, since the substantially entire part of the ruler 61 has the translucency, and especially the part where the distance markers 71 are displayed has the translucency, the distance markers 71 and the object to be measured can easily be matched.

Moreover, the touch operation identifying module 52 may determine whether a drag operation (an operation to draw a line, or a linear touch operation) along the contour of the ruler 61 (the long side of the contour) is performed (Step S105). As described above, since the processor 25 grasps the position of the contour of the ruler 61, it can detect the drag operation along the contour of the ruler 61.

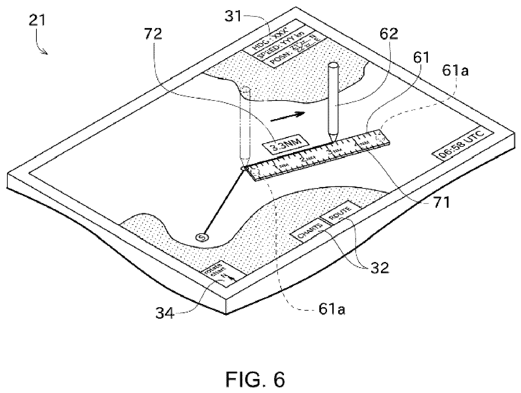

Moreover, Fig. 6 illustrates a situation in which a drag operation is performed by a stylus 62. The stylus 62 may be a stick-like (pen-like) member, and at least a pointed end (an end to be contacted with the screen) may have conductivity. In this embodiment, although the stylus 62 is used for the drag operation in consideration of an affinity with the ruler 61, the drag operation may be performed by using user's finger. When the touch operation identifying module 52 determines that the drag operation along the contour of the ruler 61 is performed, the tool displaying module 54 may display the distance corresponding to a length of the drag operation, that is, a length of the drawn line (a distance display box 72 of Fig. 6) (Step S106).

Note that the pointed end of the stylus 62 may self-generate static electricity, or may generate a magnetic field. Moreover, since the stylus 62 of this embodiment can touch only one point, the operation by the stylus 62 and the operation by user's finger cannot be distinguished. However, in a case of adopting the configuration in which the stylus 62 generates the magnetic field, since the operation by the stylus 62 can be distinguished from the operation by user's finger, different processing can be executed between when the operation is performed by the stylus 62 and when the operation is peformed by user's finger. For example, when the drag operation is performed by the stylus 62, the length corresponding to the drag operation may be displayed, while when the drag operation is performed by user's finger, the nautical chart may be scrolled. Alternatively, the nautical chart display device 20 may be configured to be switchable of a mode between a normal mode in which the nautical chart is scrolled according to the drag operation, and a distance display mode in which the distance corresponding to the length of the drag operation is displayed according to the drag operation.

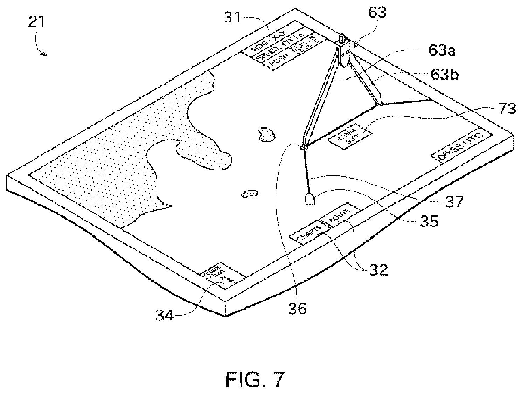

Next, processing using another tool, a divider 63, is described with reference to Fig. 7. Fig. 7 is a view illustrating a situation in which an operation is performed by using the divider 63 so that the distance and the direction are displayed on the screen. Typically, a divider may be used, for example, for obtaining a distance between two points on a paper nautical chart.

The divider 63 of this embodiment may include a first leg part 63a and a second leg part 63b, and an angle therebetween may be configured to be changeable, which is the same as the divider for the paper nautical chart. Moreover, the divider 63 of this embodiment may be different from the divider for the paper nautical chart in that pointed ends (ends contacted with the screen of the display unit 21) of the first leg part 63a and the second leg part 63b have conductivity, and the conductivity may have a magnitude which is detectable by the detector 22.

As illustrated in Fig. 7, by the first leg part 63a and the second leg part 63b being contacted with the screen of the display unit 21, a distance on the nautical chart from a first contact position which is a contact position of the first leg part 63a with the screen, to a second contact position which is a contact position of the second leg part 63b with the screen, and a direction of the second contact position relative to the first contact position, may be displayed in a divider display box 73. Note that in order to demonstrate this function, the nautical chart display device 20 may be required to be switched to a divider mode. In the divider mode, a touched position detected first (a position touched by the first leg part 63a in the example of Fig. 7) may be used as a reference position.

Alternatively, in a case when the nautical chart display device 20 operates as the touch panel of the electromagnetic induction type in addition to the capacitance type touch panel, a magnetic field may be generated at the pointed ends (the ends contacted with the screen of the display unit 21) of the first leg part 63a and the second leg part 63b so that the instruction by the divider 63 and the touch operation by user's finger can be distinguished. In this case, the divider display box 73 can be displayed without the mode being switched.

As described above, the nautical chart display device 20 of this embodiment includes the display unit 21, the touch operation identifying module 52, the tool identifying module 53, and the tool displaying module 54, and the nautical chart display program may be executed to perform a nautical chart display method of the present disclosure. The display unit 21 displays the nautical chart on the screen. The touch operation identifying module 52 identifies the touch operation to the screen. The tool identifying module 53 identifies the position and the orientation of the ruler 61 placed on the screen. The tool displaying module 54 displays the distance markers 71 according to the scale of the nautical chart on the screen at the position where the ruler 61 is placed, based on the position and the orientation identified by the tool identifying module 53.

Accordingly, since the distance on the nautical chart is displayed only by the ruler 61 being placed on the screen, it is possible to measure the distance in the method easily understandable even for the user who is not used to the measurement of the distance by the touch operation. Particularly, although when the paper nautical chart is used, a calculation of correspondence between the scale of the nautical chart and markers of the ruler is required, in this disclosure, the time and effort for this calculation can be saved since the distance markers 71 corresponding to the scale of the nautical chart are displayed.

In the nautical chart display device 20 of this embodiment, the ruler 61 may have the linear contour. The tool displaying module 54 may display the distance markers 71 on the screen at the position corresponding to the contour of the ruler 61.

Accordingly, the distance markers 71 are easily understandable since they are located at the same position as those of the typical ruler. Further, by the contour of the ruler 61 being matched with the part to be measured by the user, the measurement is possible without the part to be measured being obstructed by the ruler 61.

In the nautical chart display device 20 of this embodiment, when the touch operation identifying module 52 identifies that the linear touch operation along the contour of the ruler 61 is performed in the state where the distance markers 71 are displayed at the position corresponding to the contour of the ruler 61, the tool displaying module 54 may display, on the display unit 21, the distance on the nautical chart corresponding to the linear touch operation.

Accordingly, the distance of the part to be measured on the nautical chart can easily be measured.

In the nautical chart display device 20 of this embodiment, the tool identifying module 53 may identify the operation to the screen by the stylus 62. The tool displaying module 54 may display, on the display unit 21, the distance on the nautical chart corresponding to the linear touch operation (the distance display box 72), when the linear touch operation is performed by the stylus 62.

Accordingly, only by drawing a line using the tools corresponding to the ruler and a pen, the user can measure the length of the line on the nautical chart.

In the nautical chart display device 20 of this embodiment, the ruler 61 may have a rectangular plate shape. The tool displaying module 54 may display the distance markers 71 at the position corresponding to both of the two long sides of the contour.

Accordingly, the user can measure the distance by using either of the two long sides.

In the nautical chart display device 20 of this embodiment, the plurality of detecting objects 61a to be detected may be disposed in a given layout in the ruler 61. The tool identifying module 53 may compare the layout of the detecting objects 61a stored in advance, and the layout of the plurality of the detecting objects 61a of which the positions are detected, to identify the position and the orientation of the ruler 61.

Accordingly, the position and the orientation of the ruler 61 can be identified by the easy processing.

In the nautical chart display device 20 of this embodiment, the tool identifying module 53 may identify the first contact position which is the contact position of the first leg part 63a of the divider 63 with the screen, and the second contact position which is the contact position of the second leg part 63b of the divider 63 with the screen. The tool displaying module 54 may display the direction of the second contact position relative to the first contact position, and the distance from the first contact position to the second contact position.

Accordingly, even when the user is not used to the touch operation, he/she can easily measure the distance between the two points, and the direction.

Although the suitable embodiment of the present disclosure is described above, the above configurations may be changed as follows.

Although the detecting objects 61a are disposed inside the ruler 61 in the embodiment described above, alternatively, a member (e.g., a sheet-like member) on which the detecting objects 61a are disposed in a given layout, may be pasted on a typical ruler so that the ruler can be used similarly to the ruler 61 of the embodiment described above.

The flowchart of Fig. 3 is one example, and the order of the processings may be changed, a part of the processings may be omitted, or another processing may be added.

Although the nautical chart display device 20 according to the embodiment described above is disposed so that the screen thereof becomes parallel to the substantially horizontal plane, it may be disposed at a different angle.

Although in the embodiment described above, the present disclosure is applied to the nautical chart display device which mainly displays the electronic nautical chart, the present disclosure can also be applied to a display device capable of displaying, for example, a radar image or an image from a fish finder in addition to the electronic nautical chart.

### DESCRIPTION OF REFERENCE CHARACTERS

- 20: Nautical Chart Display Device
- 21: Display Unit
- 22: Detector
- 23: Input Part
- 24: Memory
- 25: Processor
- 61: Ruler (Measurement Tool)
- 62: Stylus
- 63: Divider

It should be emphasized that many variations and modifications may be made to the above-described embodiments, the elements of which are to be understood as being among other acceptable examples. All such modifications and variations are intended to be included herein within the scope of the following claims.

## Claims

1. A nautical chart display device (20), comprising:
a display unit (21) configured to display a nautical chart on a screen; and
a touch operation identifying module (52) configured to identify a touch operation to the screen,
wherein the device is configured to display distance markers (71) according to a scale of the nautical chart on the screen;
**characterized by**:
a tool identifying module (53) configured to identify a position and an orientation of a measurement tool (61) placed on the screen; and
a tool displaying module (54) configured to display distance markers (71) according to a scale of the nautical chart on the screen, based on the position and the orientation identified by the tool identifying module (53),
wherein the tool displaying module (54) is configured to display the distance markers (71) on the screen of the display unit (21) at the position where the measurement tool (61) is placed, and, when the measurement tool (61) is placed on the screen of the display unit (21), content displayed on the screen is visible through the measurement tool.

2. The nautical chart display device (20) of claim 1, wherein the measurement tool (61) includes a linear contour, and
wherein the tool displaying module (54) displays the distance markers (71) on the screen at a position corresponding to the contour of the measurement tool (61).

3. The nautical chart display device (20) of claim 2, wherein, when the touch operation identifying module (52) identifies that a linear touch operation along the contour of the measurement tool (61) is performed in a state where the distance markers (71) are displayed at the position corresponding to the contour, the tool displaying module (54) displays, on the display unit (21), a distance on the nautical chart corresponding to the linear touch operation.

4. The nautical chart display device (20) of claim 3, wherein the tool identifying module (53) identifies an operation to the screen by a stylus (62), and
wherein, when a linear touch operation is performed by the stylus (62), the tool displaying module (54) displays, on the display unit (21), a distance on the nautical chart corresponding to the linear touch operation.

5. The nautical chart display device (20) of any one of claims 2 to 4, wherein the measurement tool (61) has a rectangular plate shape, and
wherein the tool displaying module (54) displays the distance markers (71) at a position corresponding to both of two long sides of the contour.

6. The nautical chart display device (20) of any one of claims 1 to 5, wherein a plurality of detecting objects of which positions are detected are disposed in a given layout in the measurement tool (61), and
wherein the tool identifying module (53) compares a layout of the detecting objects stored in advance, and a layout of the plurality of detecting objects of which the positions are detected, to identify a position and an orientation of the measurement tool (61).

7. The nautical chart display device (20) of any one of claims 1 to 6, wherein the tool identifying module (53) is further configured to identify a first contact position which is a contact position of a first leg part of a divider (63) with the screen, and a second contact position which is a contact position of a second leg part of the divider (63) with the screen, and
wherein the tool displaying module (54) is further configured to display a direction of the second contact position relative to the first contact position, and a distance from the first contact position to the second contact position.

8. The nautical chart display device (20) of any one of claims 1 to 7, wherein at least part of the measurement tool (61) is transparent or semi-transparent, and the tool displaying module (54) is configured to display the distance markers (71) on the screen in a position where the user can use the measurement tool (61) as if the distance markers (71) were printed on the measurement tool.

9. A nautical chart display system comprising a nautical chart display device (20) according to any of the preceding claims and a measurement tool (61).

10. A method for displaying a nautical chart, comprising:
identifying a touch operation to a screen of a display unit (21) on which a nautical chart is displayed; and
displaying distance markers (71) according to a scale of the nautical chart on the screen,
**characterized by**:
identifying a position and an orientation of a measurement tool (61) placed on the screen; and
displaying the distance markers (71) according to a scale of the nautical chart on the screen, based on the identified position and orientation,
wherein the distance markers (71) are displayed on the screen at the position where the measurement tool (61) is placed, and
content displayed on the screen is visible through the measurement tool when the measurement tool (61) is placed on the screen.

11. A non-transitory computer-readable recording medium storing a control program causing a processor of a nautical chart display device to execute processing, the processor configured to control operation of the device, the processing comprising:
identifying a touch operation to a screen of a display unit (21) on which a nautical chart is displayed; and
displaying distance markers (71) according to a scale of the nautical chart on the screen,
**characterized by**:
identifying a position and an orientation of a measurement tool (61) placed on the screen; and
displaying the distance markers (71) according to a scale of the nautical chart on the screen, based on the identified position and orientation,
wherein the distance markers (71) are displayed on the screen at the position where the measurement tool (61) is placed, and
content displayed on the screen is visible through the measurement tool when the measurement tool (61) is placed on the screen.

## Patentansprüche

1. Seekartenanzeigegerät (20), das Folgendes umfasst:
eine Anzeigeeinheit (21), konfiguriert zum Anzeigen einer Seekarte auf einem Bildschirm;
ein Berührungsvorgangidentifizierungsmodul (52), konfiguriert zum Identifizieren eines Berührungsvorgangs auf dem Bildschirm,
wobei das Gerät zum Anzeigen von Entfernungsmarkern (71) gemäß einem Maßstab der Seekarte auf dem Bildschirm konfiguriert ist;
**gekennzeichnet durch**:
ein Instrumentidentifizierungsmodul (53), konfiguriert zum Identifizieren einer Position und einer Orientierung eines auf dem Bildschirm befindlichen Messinstruments (61); und
ein Instrumentanzeigemodul (54), konfiguriert zum Anzeigen von Entfernungsmarkern (71) gemäß einem Maßstab der Seekarte auf dem Bildschirm auf der Basis der durch das Instrumentidentifizierungsmodul (53) identifizierten Position und Orientierung,
wobei das Instrumentanzeigemodul (54) zum Anzeigen der Entfernungsmarker (71) auf dem Bildschirm der Anzeigeeinheit (21) an der Position konfiguriert ist, an der sich das Messinstrument (61) befindet, und wobei, wenn sich das Messinstrument (61) auf dem Bildschirm der Anzeigeeinheit (21) befindet, auf dem Bildschirm angezeigter Inhalt durch das Messinstrument sichtbar ist.

2. Seekartenanzeigegerät (20) nach Anspruch 1, wobei das Messinstrument (61) eine lineare Kontur aufweist und
wobei das Instrumentanzeigemodul (54) die Entfernungsmarker (71) auf dem Bildschirm an einer Position anzeigt, die der Kontur des Messinstruments (61) entspricht.

3. Seekartenanzeigegerät (20) nach Anspruch 2, wobei, wenn das Berührungsvorgangidentifizierungsmodul (52) identifiziert, dass ein linearer Berührungsvorgang entlang der Kontur des Messinstruments (61) in einem Zustand stattfindet, in dem die Entfernungsmarker (71) an der der Kontur entsprechenden Position angezeigt werden, das Instrumentanzeigemodul (54) auf der Anzeigeeinheit (21) eine Entfernung entsprechend dem linearen Berührungsvorgang auf der Seekarte anzeigt.

4. Seekartenanzeigegerät (20) nach Anspruch 3, wobei das Instrumentidentifizierungsmodul (53) einen Vorgang durch einen Stift (62) am Bildschirm identifiziert und
wobei, wenn ein linearer Berührungsvorgang durch den Stift (62) stattfindet, das Instrumentanzeigemodul (54) auf der Anzeigeeinheit (21) eine Entfernung entsprechend dem linearen Berührungsvorgang auf der Seekarte anzeigt.

5. Seekartenanzeigegerät (20) nach einem der Ansprüche 2 bis 4, wobei das Messinstrument (61) eine rechteckige Plattenform aufweist, und
wobei das Instrumentanzeigemodul (54) die Entfernungsmarker (71) an einer Position entsprechend beiden von zwei Längsseiten der Kontur anzeigt.

6. Seekartenanzeigegerät (20) nach einem der Ansprüche 1 bis 5, wobei mehrere Erkennungsobjekte, deren Positionen erkannt werden, in einem gegebenen Layout im Messinstrument (61) angeordnet sind, und
wobei das Instrumentidentifizierungsmodul (53) ein vorab gespeichertes Layout der Erkennungsobjekte mit einem Layout der mehreren Erkennungsobjekte, deren Positionen erkannt werden, vergleicht, um eine Position und eine Orientierung des Messinstruments (61) zu identifizieren.

7. Seekartenanzeigegerät (20) nach einem der Ansprüche 1 bis 6, wobei das Instrumentidentifizierungsmodul (53) ferner zum Identifizieren einer ersten Kontaktposition, die eine Kontaktposition eines ersten Schenkelteils eines Teilers (63) mit dem Bildschirm ist, und einer zweiten Kontaktposition konfiguriert ist, die eine Kontaktposition eines zweiten Schenkelteils des Teilers (63) mit dem Bildschirm ist, und
wobei das Instrumentanzeigemodul (54) ferner zum Anzeigen einer Richtung der zweiten Kontaktposition relativ zur ersten Kontaktposition und einer Entfernung von der ersten Kontaktposition zur zweiten Kontaktposition konfiguriert ist.

8. Seekartenanzeigegerät (20) nach einem der Ansprüche 1 bis 7, wobei mindestens ein Teil des Messinstruments (61) transparent oder halbtransparent ist und das Instrumentanzeigemodul (54) zum Anzeigen der Entfernungsmarker (71) auf dem Bildschirm an einer Position konfiguriert ist, an der der Benutzer das Messinstrument (61) so verwenden kann, als wären die Entfernungsmarker (71) auf das Messinstrument gedruckt.

9. Seekartenanzeigesystem, das ein Seekartenanzeigegerät (20) nach einem der vorherigen Ansprüche und ein Messinstrument (61) umfasst.

10. Verfahren zum Anzeigen einer Seekarte, das Folgendes beinhaltet:
Identifizieren eines Berührungsvorgangs auf einem Bildschirm einer Anzeigeeinheit (21), auf dem eine Seekarte angezeigt wird; und
Anzeigen von Entfernungsmarkern (71) gemäß einem Maßstab der Seekarte auf dem Bildschirm,
**gekennzeichnet durch**:
Identifizieren einer Position und einer Orientierung eines auf dem Bildschirm befindlichen Messinstruments (61); und
Anzeigen der Entfernungsmarker (71) gemäß einem Maßstab der Seekarte auf dem Bildschirm auf der Basis der identifizierten Position und Orientierung,
wobei die Entfernungsmarker (71) auf dem Bildschirm an der Position angezeigt werden, an der sich das Messinstrument (61) befindet, und
auf dem Bildschirm angezeigter Inhalt durch das Messinstrument sichtbar ist, wenn sich das Messinstrument (61) auf dem Bildschirm befindet.

11. Nicht-transitorisches, computerlesbares Aufzeichnungsmedium, das ein Steuerprogramm speichert, das einen Prozessor eines Seekartenanzeigegeräts veranlasst, eine Verarbeitung auszuführen, wobei der Prozessor zum Steuern des Betriebs des Geräts konfiguriert ist, wobei die Verarbeitung Folgendes beinhaltet:
Identifizieren eines Berührungsvorgangs auf einem Bildschirm einer Anzeigeeinheit (21), auf dem eine Seekarte angezeigt wird; und
Anzeigen von Entfernungsmarkern (71) gemäß einem Maßstab der Seekarte auf dem Bildschirm,
**gekennzeichnet durch**:
Identifizieren einer Position und einer Orientierung eines auf dem Bildschirm befindlichen Messinstruments (61); und
Anzeigen der Entfernungsmarker (71) gemäß einem Maßstab der Seekarte auf dem Bildschirm auf der Basis der identifizierten Position und Orientierung,
wobei die Entfernungsmarker (71) auf dem Bildschirm an der Position angezeigt werden, an der sich das Messinstrument (61) befindet, und
auf dem Bildschirm angezeigter Inhalt durch das Messinstrument sichtbar ist, wenn sich das Messinstrument (61) auf dem Bildschirm befindet.

## Revendications

1. Dispositif d'affichage de carte nautique (20), comprenant :
une unité d'affichage (21) configurée pour afficher une carte nautique sur un écran ; et
un module d'identification d'opération tactile (52) configuré pour identifier une opération tactile sur l'écran,
le dispositif étant configuré pour afficher des repères de distance (71) selon une échelle de la carte nautique sur l'écran ;
**caractérisé par** :
un module d'identification d'outil (53) configuré pour identifier une position et une orientation d'un outil de mesure (61) placé sur l'écran ; et
un module d'affichage d'outil (54) configuré pour afficher des repères de distance (71) selon une échelle de la carte nautique sur l'écran, sur la base de la position et de l'orientation identifiées par le module d'identification d'outil (53),
le module d'affichage d'outil (54) étant configuré pour afficher les repères de distance (71) sur l'écran de l'unité d'affichage (21) à la position où l'outil de mesure (61) est placé, et, lorsque l'outil de mesure (61) est placé sur l'écran de l'unité d'affichage (21), le contenu affiché sur l'écran étant visible par l'intermédiaire de l'outil de mesure.

2. Dispositif d'affichage de carte nautique (20) selon la revendication 1, l'outil de mesure (61) comprenant un contour linéaire, et
le module d'affichage d'outil (54) affichant les repères de distance (71) sur l'écran à une position correspondant au contour de l'outil de mesure (61).

3. Dispositif d'affichage de carte nautique (20) selon la revendication 2, lorsque le module d'identification d'opération tactile (52) identifie qu'une opération tactile linéaire le long du contour de l'outil de mesure (61) est réalisée dans un état où les repères de distance (71) sont affichés à la position correspondant au contour, le module d'affichage d'outil (54) affichant, sur l'unité d'affichage (21), une distance sur la carte nautique correspondant à l'opération tactile linéaire.

4. Dispositif d'affichage de carte nautique (20) selon la revendication 3, le module d'identification d'outil (53) identifiant une opération sur l'écran à l'aide d'un stylet (62), et
lorsqu'une opération tactile linéaire est réalisée à l'aide du stylet (62), le module d'affichage d'outil (54) affichant, sur l'unité d'affichage (21), une distance sur la carte nautique correspondant à l'opération tactile linéaire.

5. Dispositif d'affichage de carte nautique (20) selon l'une quelconque des revendications 2 à 4, l'outil de mesure (61) présentant une forme de plaque rectangulaire, et
le module d'affichage d'outil (54) affichant les repères de distance (71) à une position correspondant aux deux côtés longs du contour.

6. Dispositif d'affichage de carte nautique (20) selon l'une quelconque des revendications 1 à 5, une pluralité d'objets de détection dont les positions sont détectées étant disposés selon une disposition donnée dans l'outil de mesure (61), et
le module d'identification d'outil (53) comparant une disposition des objets de détection stockée à l'avance et une disposition de la pluralité d'objets de détection dont les positions sont détectées, afin d'identifier une position et une orientation de l'outil de mesure (61).

7. Dispositif d'affichage de carte nautique (20) selon l'une quelconque des revendications 1 à 6, le module d'identification d'outil (53) étant en outre configuré pour identifier une première position de contact qui est une position de contact d'une première partie de branche d'un diviseur (63) avec l'écran, et une seconde position de contact qui est une position de contact d'une seconde partie de branche du diviseur (63) avec l'écran, et
le module d'affichage d'outil (54) étant en outre configuré pour afficher une direction de la seconde position de contact par rapport à la première position de contact, et une distance entre la première position de contact et la seconde position de contact.

8. Dispositif d'affichage de carte nautique (20) selon l'une quelconque des revendications 1 à 7, au moins une partie de l'outil de mesure (61) étant transparente ou semi-transparente, et le module d'affichage d'outil (54) étant configuré pour afficher les repères de distance (71) sur l'écran dans une position où l'utilisateur peut utiliser l'outil de mesure (61) comme si les repères de distance (71) étaient imprimés sur l'outil de mesure.

9. Système d'affichage de carte nautique comprenant un dispositif d'affichage de carte nautique (20) selon l'une quelconque des revendications précédentes et un outil de mesure (61).

10. Procédé d'affichage d'une carte nautique, comprenant les étapes consistant à :
identifier une opération tactile sur un écran d'une unité d'affichage (21) sur lequel une carte nautique est affichée ; et
afficher des repères de distance (71) selon une échelle de la carte nautique sur l'écran,
**caractérisé par** :
identifier une position et une orientation d'un outil de mesure (61) placé sur l'écran ; et
afficher les repères de distance (71) selon une échelle de la carte nautique sur l'écran, sur la base de la position et de l'orientation identifiées,
les repères de distance (71) étant affichés sur l'écran à la position où l'outil de mesure (61) est placé, et
le contenu affiché sur l'écran étant visible par l'intermédiaire de l'outil de mesure lorsque l'outil de mesure (61) est placé sur l'écran.

11. Support d'enregistrement non transitoire lisible par ordinateur, stockant un programme de commande amenant un processeur d'un dispositif d'affichage de carte nautique à exécuter un traitement, le processeur étant configuré pour commander le fonctionnement du dispositif, le traitement comprenant les étapes consistant à :
identifier une opération tactile sur un écran d'une unité d'affichage (21) sur lequel une carte nautique est affichée ; et
afficher des repères de distance (71) selon une échelle de la carte nautique sur l'écran,
**caractérisé par** :
identifier une position et une orientation d'un outil de mesure (61) placé sur l'écran ; et
afficher les repères de distance (71) selon une échelle de la carte nautique sur l'écran, sur la base de la position et de l'orientation identifiées,
les repères de distance (71) étant affichés sur l'écran à la position où l'outil de mesure (61) est placé, et
le contenu affiché sur l'écran étant visible par l'intermédiaire de l'outil de mesure lorsque l'outil de mesure (61) est placé sur l'écran.
